Europäisches Patentamt

European Patent Office

Office européen des brevets

(19)

(11) Publication number: **0 269 950 B1**

# EUROPEAN PATENT SPECIFICATION

(12)

(45) Date of publication of patent specification: **08.01.92**

(51) Int. Cl.⁵: **C08J 3/00**, C08L 69/00, //(C08L69/00,27:12)

(21) Application number: **87117041.1**

(22) Date of filing: **19.11.87**

(54) A process for incorporation of fluoropolymers into polycarbonates.

(30) Priority: **02.12.86 US 936852**

(43) Date of publication of application:
**08.06.88 Bulletin 88/23**

(45) Publication of the grant of the patent:
**08.01.92 Bulletin 92/02**

(84) Designated Contracting States:
**DE FR GB IT NL**

(56) References cited:
**EP-A- 0 023 047**     **EP-A- 0 154 138**
**EP-A- 0 166 295**     **EP-A- 0 182 226**
**BE-A- 669 650**      **DE-C- 1 286 302**
**US-A- 3 940 455**

(73) Proprietor: **BAYER AG**

**W-5090 Leverkusen 1 Bayerwerk(DE)**

Proprietor: **MOBAY CORPORATION**
**Mobay Road**
**Pittsburgh Pennsylvania 15205-9741(US)**

(72) Inventor: **Carter, Russel P., Jr.**
**12 Orchard Drive**
**New Martinsville, W.VA 26155(US)**
Inventor: **Grigo, Ulrich**
**Michelsheide 9**
**W-4152 Kempen 13(DE)**
Inventor: **Krishman, Sivaram**
**1653 Little Meadow Road**
**Pittsburgh, PA 15241(US)**
Inventor: **Witman, Mark W.**
**1856 Taper Drive**
**Pittsburgh, PA 15249(US)**
Inventor: **Kircher, Klaus**
**Alfred-Kubin-Strasse 3**
**W-5090 Leverkusen(DE)**
Inventor: **Kress, Hans-Jürgen**
**Scheiblerstrasse 111**
**W-4150 Krefeld(DE)**
Inventor: **Alewelt, Wolfgang**
**Stratumer Feld 17**
**W-4150 Krefeld 12(DE)**

(74) Representative: **Gremm, Joachim, Dr. et al**
**Bayer AG Konzernverwaltung RP Patente Konzern**
**W-5090 Leverkusen 1, Bayerwerk(DE)**

## Description

The present invention is related to a process for incorporation of fluoropolymers in amounts between 0.01 and 40 % by weight, preferably between 5.05 and 33 % by weight into halogenfree, thermoplastic, aromatic polycarbonates having a weight average molecular weight of 5000 to 200 000 comprising adding an aqueous dispersion of a fluoropolymer to a solution of a halogenfree, thermoplastic, aromatic polycarbonate in an organic solvent, agitating the mixture thus formed, adding a precipitation agent selected from esters, aromatic hydrocarbons, cycloaliphatic hydrocarbons, aliphatic hydrocarbons, alcohols, carbonates, ethers, ketones and alcoholic solutions of aliphatic carboxylic acids and earth alkali metal halides, in an amount which is greater than 50 % by weight, based on the weight of the polycarbonate solution, filtering the co-precipitate washing and drying the filtrate, whereby the amount of fluoropolymer added via dispersion to the polycarbonate solution is between 0.01 % and 40 % by weight, preferably between 5.05 % and 33 % by weight, based on the combined weight of fluoropolymer and polycarbonate.

The preferred precipitation agents are ethyl acetate, toluene, methanol, ethanol, cyclohexane, 2.2.4-trimethylpentane, n-heptane, isooctane, diethylcarbonate, glycol carbonate, dibutylether, acetone and methanolic solutions of $CH_3COOH$ and $CaCl_2$.

According to U.S. Patent 3,005,795 thermoplastic resins containing finely divided fibrous polytetrafluoroethylene. The incorporation of the polytetrafluoroethylene can be also made via solutions, precipitation and coagulation (col. 4, lines 1 to 5 of U.S. Patent 3,005,795). Details of such an incorporation method are not disclosed.

According to GB Patent 938,931 polytetrafluoroethylene is to be incorporated into polycarbonates in amounts up to 40 % by volume either in powder form or in fiber form.

According to U.S. Patent 3,290,412 molding compounds prepared from mixtures of polytetrafluoroethylene and resinous polycarbonates are known. The amount of polycarbonate is about 10 to 40 % in the mixture, in order to improve moldability of the polytetrafluoroethylene. The addition of the polycarbonate to the polytetrafluoroethylene can be accomplished in any manner. Precipitation and coagulation are not mentioned.

According to U.S. Patent 3,294,871 polytetrafluoroethylene thermoplastic resin compositions are known, which contain about 10 to 20 % by weight of PTFE. For the preparation of these mixtures, PTFE is used as a latex dispersion or emulsion thereof. The thermoplastic resins may be preferably used as a solution in a solvent (col. 6, lines 12 to 18 of U.S. Patent 3,294,871). The liquid phase of the blended resins may be removed by evaporation, devolatilization and the like.

According to De-OS 3,322,260 (Le A 22 391) the polytetrafluoroethylene is incorporated into mixtures of polycarbonates and graft polymers and optionally thermoplastic polymerisates via a coagulated mixture of the polytetrafluoroethylene with the graft polymers and/or with the thermoplastic polymerisates. The coagulated mixtures used for the preparation of the polycarbonate moulding compositions according to DE-OS 3,322,260 can be used also in other moulding compositions containing polycarbonates, for example in combinations of polycarbonates, polyesters and graft polymerisates (Page 16, paragraph 3 of DE-OS 3,322,260).

According to DE-OS 3,442,281 (Le A 23 338), respectively U.S. Patent 4,649,168, the incorporation of tetrafluoroethylene polymers into polycarbonates is also made via a coagulated mixture of tetrafluoroethylene polymers with graft polymers. Thus, the direct incorporation of tetrafluoroethylene polymers into polycarbonates without the help of other polymerisates seems to be still difficult. But such an intimate mixture seems necessary for obtaining polycarbonate moulding compositions having good surface properties.

On the other side, it is evident from the prior art, that the polytetrafluoroethylene should have fibrous structure in order to create good mechanical properties in the thermoplastic materials being incorporated therewith. (See e.g. U.S. Patent 3,005,795 and U.S. Patent 3,294,871, col. 6, lines 45 ff.)

According to U.S. Patent 3,673,278, respectively DE-OS 2,211,826, fluorinated polyolefins are incorporated into halogenated polyoarbonates in order to improve the flame retardant properties of the halogenated polycarbonates.

The fluorinated polyolefins suitable are those which will not form fibrils, otherwise discoloration turning to dark brown and pitted surfaces are obtained. (Col. 2, Example III of U.S. Patent 3,673,278).

According to table 1 of column 2 of U.S. Patent 3,673,278 the resulting flame retardant polycarbonates are still dripping. According to our experimental findings test specimen of 1.6 mm thickness have V2 and test specimen of 3.2 mm thickness have V-0 according to UL subject 94.

Contrary thereto, polytetrafluoroethylenes which form fibrils, added to copolycarbonates of Bisphenol-A/TetrabromobisphenolA (94.8 mol-%/5.2 mol-%) in an amount of 0.15 % by weight produce test specimen having V-0 according to UL subject 94 at both thickness, at 1.6 mm and at 3.2 mm.

Thus, the fibre-form improves the flame retardancy but obviously worsens the surface properties in halogenated polycarbonates.

According to DE-OS 2,535,262, respectively U.S. Patent 4,391,935 improved flame retardant polycarbonates are known having an organic alkali metal salt or an alkaline earth metal salt and in admixture therewith as antidripping agent a fluorinated polyolefin. Large particle size of the polyolefins is preferred, because it tends to disperse readily in polymers and bond them together into fibrous materials (See column 1 of U.S. Patent 4,391,935).

The incorporation of the fluorinated polyolefins is done via extruder at about 265° C, which means via the melt of the thermoplastic polycarbonate. The flame retardant properties (US-subject 94) at thicknesses between 1.6 to 3.2 mm teach V-0. Good surface properties are not intended according to the teaching of U.S. Patent 4,391,935, respectively DE-OS 2,535,262.

It obviously seems from U.S. Patents 3,673,278 and 4,391,935 that good flame proof properties of polycarbonates are based on the fiber forming ability of the fluorinated polyolefins which seems to be controversary for obtaining good surfaces of the polycarbonate moulded parts.

In the present context the halogenfree aromatic polycarbonates are homopolycarbonates and copolycarbonates both of which are well recognized resins. Preferred resins are the ones produced from the following dihydroxy compounds: hydroquinone, resorcinol, dihydroxydiphenyls, bis-(hydroxyphenyl)-alkanes, bis-(hydroxyphenyl)-cycloalkanes, bis-(hydroxyphenyl)-sulfides, bis-(hydroxyphenyl)-ketones, bis-(hydroxyphenyl)-sulfoxides, bis-(hydroxyphenyl)-sulfones, 4,4'-bis-(hydroxyphenyl)-diisopropylbenzenes, including in each case the alkyl substituents on the aromatic nuclei. These and other suitable diphenols are well known in the art and described e.g. in U.S. Patent 3,028,365 and in the monograph "H. Schnell, Chemistry and Physics of Polycarbonates", Interscience Publishers, New York, 1964.

Particularly preferred dihydroxy compounds are: 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 4,4'-bis-(4-hydroxyphenyl)-propane, bis-(3,5-dimethyl-4-hydroxyphenyl)-methane, 2,2-bis-(3,5-dimethyl-4-hyroxyphenyl)-propane, bis-(3,5-dimethyl-4-hydroxyphenyl)-sulfone, 2,4-bis-(3,5-dimethyl-4-hydroxyphenyl)-2-methylbutane and 1,1-bis-(3,5-dimethyl-4-hydroxyphenyl)-cyclohexane. Those most preferred as the following: 2,2-bis-(4-hydroxyphenyl)-propane, 2,2-bis-(3,5-dimethyl-4-hydroxyphenyl)-propane and 1,1-bis-(4-hydroxyphenyl)-cyclohexane. Preferred halogenfree aromatic polycarbonates are those which are based on one or more of the diphenols mentioned as preferred. Particularly preferred are homopolycarbonates which are based on bisphenol A. The preparation processes of aromatic polycarbonates such as by melt transesterification from bisphenol and diphenyl carbonates or in solution from bisphenol and phosgene such as be the pyridine process or by a two-phase boundary process are well known in the art. In the context of the invention the halogenfree aromatic polycarbonates may be branched such as by the incorporation of small amounts, preferably between 0.05 and 2.0 mol-% (based on the dihydroxy compound), of polyfunctional compounds, e.g. those with 3 or more aromatic hydroxyl functionalities. The halogenfree aromatic polycarbonate should have a weight average molecular weight of 5,000 to 200,000, preferably 20,000 to 80,000 (determined by measurement of the relative viscosity in methylene chloride at 25° C at a concentration of 0.5% by weight).

Halogenfree polycarbonates do not exclude minor amounts of saponifiable halogen resulting from the phosgenating reaction or minor amounts derived from remaining polycarbonate solvent. Halogenfree polycarbonates mean those derived from halogenfree diphenol, optionally halogenfree chain stoppers and optionally halogenfree branching agents.

Among the suitable fluoropolymers there are polymers having fluorine contents of 65 to 76 % by weight preferably 70 to 76 % by weight. Examples are polytetrafluoroethylene (PTFE) tetrafluoroethylene-hexafluoropropylene copolymers and tetrafluoroethylene copolymers optionally copolymerized with small amounts of fluorine-free ethylenically unsaturated monomers. These polymers are well known. They are characterized in their fine particle size and are available as aqueous dispersions having a solid content of between 30 and 70% by weight. Among the PTFE dispersions suitable in the present context is Teflon 30 N® resin from duPont. These are characterized in that the PTFE resin is present as particles having a size distribution of between 0.1 and 10 μm.

In order to achieve good results by the process of instant invention, it is important to impart sufficient agitation (at least 15 minutes) in the preparation of the co-precipitates of polycarbonate and the fluoropolymer. If the mixture is well stirred during the addition, the phases will not immediately separate even after the agitator is switched off.

The solvents suitable for halogenfree, aromatic polycarbonates are known in the literature and among the preferred ones are halogenated hydrocarbons such as methylene chloride. Tetrahydrofuran may also be used. In one preferred version of practicing the invention, 3 parts by weight per hour of an emulsion consisting of an aqueous PTFE dispersion in polycarbonate solution and 1.5 to 12 parts by weight per hour of a precipitation agent were separately metered into the first agitator vessel of a cascade that consists of 2 agitator vessels with overflows. The halogenfree, aromatic polycarbonate is precipitated together with a PTFE as a co-coagulate. The obtained suspension flows through the overflow into the second agitator vessel where the precipitation is completed. The reaction mixtures is heated in both vessels to a temperature of about 30° C. After going through the second agitator vessel the resulting coagulate is filtered, washed and dried. Washing may be carried out by conventional means using water, or an aqueous solution of acetic acid, methanol or the like.

The co-precipitates, obtained by the process according to instant invention differ from other mixtures of halogenfree, aromatic polycarbonates and fluoropolymers, obtained for example by blending, mixing and co-melting, by their microscopic structure.

Thus, another subject of instant invention are coagulated co-precipitates of halogenfree, aromatic, thermoplastic polycarbonates and fluoropolymers obtainable by the process of instant invention.

These co-precipitates obtained by the process according to instant invention are useful materials and can be used as described in the above mentioned prior art, namely in U.S. Patent 3,005,795 and 3,294,871.

These co-precipitates obtained by the process of instant invention are especially useful in preparing flame proof polycarbonate moulding compositions and polycarbonate articles.

These co-precipitates obtained according to the process of instant invention are mixed in known devices in the melt optionally with further additives such as flame retardants and/or pigments and other conventional additives. Among the conventional flame retardant additives which are suitable in the present context are alkali and alkaline earth salts of sulphonic acids. Examples of such additives are listed in German 1,930,257 and 2,903,100. Other conventional flame retarding agents such as cryolite and other inorganic halogen-containing alkali or alkaline earth salts may also be added.

The co-precipitates obtained according to the process of instant invention can be also used as an additive in polycarbonate and the composition is suitable for polycarbonate molding compositions which may advantageously be used in thermoplastic molding of articles including extruded films and sheets.

In accordance with the invention, a solution of a halogenfree aromatic polycarbonate and an aqueous dispersion of PTFE having a solids content of between 5 and 60 % by weight, are mixed under rigorous stirring. The PTFE content relative to the amount of polycarbonate is between 0.01 and 40 % by weight. The mixture is precipitated with a suitable precipitation agent and the obtained mixture is isolated, dried and pelletized. The pellets may then be mixed and processed with additional polycarbonate resins optionally together with conventional flame retardance in the melt. The molding compositions produced in accordance with this invention are uniformly translucent and exhibit good flammability rating in accordance with UL 94. In comparison to compositions which contain a blend of PTFE with polycarbonate, the present composition features better surface characteristics (less streaking and splay) and comparable or better flammability performance.

The invention is further illustrated, but is not intended to be limited by the following examples in which all parts and percentages are by weight unless otherwise specified.

EXAMPLES

Example 1

Preparation of a polycarbonate/PTFE co-coagulate (PC/PTFE coagulate) concentrate by a continuous process was carried out as follows. In an agitator vessel consisting of two agitator vessels equipped with overflows, 3 parts by weight per hour of an emulsion of 1.6 parts by weight of a 50% aqueous tetrafluoroethylene polymer dispersion in water in 100 parts by weight of a 15 % polycarbonate solution in methylene chloride (relative viscosity = 1.29, measured in a concentration of 0.5 g/100 ml in methylene chloride at 25° C) and 1.8 parts by weight 2,2,4-trimethylpentane are separately metered into the first agitator vessel. The polycarbonate precipitates together with the PTFE as a coarse-particle powder. The suspension of PC/PTFE in methylene chloride, trimethylpentane and water flows through the overflow into the second agitator vessel, where the precipitation is completed. The reaction mixture is heated in both vessels to a temperature of 30° C. The average residence time in each vessel is about 10 minutes. The resulting PC/PTFE powder is filtered off washed with water and dried for four hours in a vacuum chamber at 160° C, it contained about 5.05 % by weight of PTFE.

Example 2

The preparation of PC/PTFE coagulate in a batch process.

100 grams of polycarbonate powder were dissolved in 600 ml of methylene chloride - solution I - in a 1 liter beaker. In a second beaker there were introduced 100 grams of a 50% aqueous dispersion of PTFE -particle size 0.5-1.0 μm - and 500 ml of water (dispersion B). Solution I and dispersion B are mixed and slowly stirred so that no polycarbonate precipitates. The mixture was then poured in 1800 ml solutions of methanol acetic acid/CaCl₂ (1:1) to coagulate the mixture while continuously stirring. The precipitate was filtered and washed with methanol and then dried for 4 hours in a vacuum chamber at 120°C. The resulting product contained about 33 % by weight of PTFE.

Example 3

166 grams of a 55.0 % aqueous PTFE dispersion and 6000 grams of a 15 % polycarbonate solution in methylene chloride were introduced into an agitator vessel and mixed. The mixture was coagulated in about 20 liters of acetone. Filtering, washing and drying followed the corresponding procedure as described above. The resulting product contained 10% by weight of PTFE.

Example 4

In a procedure similar to that of Example 3 there were mixed 266.6 grams of 50 % aqueous dispersion of PTFE and 5000 grams of 15 % polycarbonate solution in methylene chloride. Precipitation was carried out in 20 liter ethanol. The resulting product contained 15 % by weight of PTFE.

Example 5 (Comparison)

99 parts of bisphenol A based homopolycarbonate were mechanically mixed with 1 part of PTFE (ASTM type 3) in powdered form. The mix was extruded (ZSK 53 twin screw extruder - Werner & Pfleiderer) at amount 300°C (maximum melt temperature) at 60 rpm. The strands thus produced were immediately pelletized. The material was then injection molded (Aarburg degasification injection molding machine) at a maximum melt temperature of about 320°C, to produce discs having a diameter of 80 mm and a thickness of 2 mm.

Holding the plates up to a light source, the highly inhomogeneous distribution of the tetrafluoroethylene polymer phase becomes apparent. Some approx. 1 mm long sections can be seen, roughly in the same direction as the flow, and some areas having a slight but uniform turbidity, while some areas being almost turbidity-free are located next to each other.

The use of a molded part of this type is not likely even in applications requiring only marginal optical quality.

Example 6 (Comparison)

In much the same way as in Example 5 molded parts containing 95 parts of bisphenol A homopolycarbonate and 5 parts of PTFE were produced. The resulting moldings are less translucent, and the PTFE phase can be easily recognized on the surface in partially large agglomerations sometimes more than 1 mm long and somewhat less wise, where the inhomogenities are oriented in the direction of flow.

Example 7 (Comparison)

90 parts of a bisphenol A polycarbonate were mixed and processed as described in Examples 5 and 6 with 10 parts by weight of PTFE. Even with this very high amount of PTFE, the same negative effects were found. The molding compound is not suitable for the production of molded parts for applications requiring aesthetic qualities.

Example 8

An aromatic polycarbonate based on bisphenol A (relative viscosity of 1.285 as measured in $CH_2Cl_2$ at 25°C in a concentration of 0.5 g/100 ml) was mixed with 4.1 % by weight of the polycarbonate/tetrafluoroethylene polymer coagulate of Example 1 and extruded at a melt temperature of 300°C and further processed into pellets. The 2 mm thick discs produced from the molding compound obtained in this manner were uniformly translucent.

The dependence of surface appearance of flame retardant polycarbonate compositions on the method of the introduction of PTFE was evaluated. A comparison was made between the performance of compositions within the invention and their counterpart where the PTFE was introduced as a conventionally blended additive. The flammability performance per UL-94 1.6 mm and 3.2 mm was identical for both types of compositions. Compositions containing 0.15 and 0.20 % PTFE show identical flammability rating independent of the method for the introduction of PTFE. On the other hand, the results show that parts made of compositions where the PTFE was introduced as a conventionally blended additive were optically inhomogeneous and had surface streaks. The compositions in accordance with the invention produced optically homogeneous parts which were free of surface streaks.

Example 9

100 grams of dissolved polycarbonate resin in methylene chloride was mixed with 151.5 grams of latex (made of 50 grams of solid PTFE and 150 grams of water). This slurry was added to a blender that contained a methanol solution containing 1 % of $CH_3COOH$ and 1 % of calcium chloride. The polycarbonate/latex was added to the solution slowly while mixing. The solution was filtered and the resulting powder was washed and dried. Amount of PTFE 27 % by weight.

Polycarbonate compositions containing the co-coagulant of the invention were prepared and their properties determined. The table below summarize the results of the evaluations.

| Compositions | 1 | 2[1] | 3 | 4 |
|---|---|---|---|---|
| Co-coagulated PC/PTFE, % | 0.648 | 0.646 | 0.32 | 0.32 |
| % PTFE | 0.24 | 0.24 | 0.12 | 0.12 |
| Flame Retarding[2] agent, % | 0.24 | 0.49 | 0.24 | 0.15 |
| Impact strength, 3.2 mm Notched Izod, J/cm | 4.9 | 2.82 | 4.45 | 7.2 |
| Melt flow,[3] g/10 min. | 3.4 | 11.7 | 4.4 | 3.0 |
| Flammability test UL-94 at 1.6 mm | V-0 | V-0 | V-0 | V-0 |
| UL-94 at 3.2 mm, 5V | pass | pass | pass | pass |

(1) Branched homopolycarbonate, melt flow rate 7.4 grams/10 min. The remaining compositions were based on a branched bisphenol-A-homopolycarbonate having a melt flow rate of about 2.0 gram/10 min.
(2) The flame retarding agent used in examples 1, 2 and 3 was cryolite; in example 4, the agent was potassium perfluorobutane sulfonate.
(3) In accordance with ASTM D-1238 condition 0.

**Claims**

1. A process for incorporation of fluoropolymers in amounts between 0.01 to 40 % by weight into halogenfree, thermoplastic, aromatic polycarbonates having a weight average molecular weight of 5000 to 200 000 comprising adding an aqueous dispersion of a fluoropolymer to a solution of a halogenfree, thermoplastic, aromatic polycarbonate in an organic solvent, agitating the mixture thus formed, adding a precipitation agent selected from esters, aromatic hydrocarbons, cycloaliphatic hydrocarbons, aliphatic hydrocarbons, alcohols, carbonates, ethers, ketones and alcoholic solutions of aliphatic carboxylic acids and earth alkali metal halides, in an amount which is greater than 50 % by weight, based on the weight of the polycarbonate solution, filtering the co-precipitate, washing and drying the filtrate, whereby the amount of fluoropolymer, added via dispersion to the polycarbonate solution is between 0.01 % and 40 % by weight, based on the combined weight of fluoropolymer and polycarbonate.

2. A process according to claim 1 comprising incorporation of 5.05 % to 33 % fluoropolymer into the polycarbonate.

3. Coagulated co-precipitates of halogenfree, aromatic, thermoplastic polycarbonates fluoropolymers obtained according to the process of claims 1 or 2.

**Revendications**

6

1. Procédé pour incorporer des polymères fluorés en quantités comprises entre 0,01 et 40 % en poids dans des polycarbonates aromatiques thermoplastiques dépourvus d'halogènes, ayant une moyenne en poids du poids moléculaire de 5000 à 200 000, qui consiste à ajouter une dispersion aqueuse d'un polymère fluoré à une solution d'un polycarbonate aromatique thermoplastique dépourvu d'halogène dans un solvant organique, à agiter le mélange ainsi formé, à ajouter un agent précipitant choisi entre des esters, des hydrocarbures aromatiques, des hydrocarbures cyclo-aliphatiques, des hydrocarbures aliphatiques, des alcools, des carbonates, des éthers, des cétones et des solutions alcooliques d'acides carboxyliques aliphatiques et des halogénures de métaux alcalino-terreux en une quantité supérieure à 50 % en poids, sur la base du poids de la solution de polycarbonate, à filtrer le co-précipité, à laver et déshydrater le filtrat, de manière que la quantité de polymère fluoré, ajouté par dispersion à la solution de polycarbonate, se situe entre 0,01 et 40 % en poids sur la base du poids total de polymère fluoré et de polycarbonate.

2. Procédé suivant la revendication 1, consistant à incorporer 5,05 % à 33 % de polymère fluoré dans le polycarbonate.

3. Co-précipités coagulés de polycarbonates thermoplastiques aromatiques dépourvus d'halogènes et de polymères fluorés, obtenus conformément au procédé de la revendication 1 ou 2.

**Patentansprüche**

1. Verfahren zur Einarbeitung von Fluorpolymeren in Mengen zwischen 0,01 und 40 Gew.-% in halogenfreie thermoplastische aromatische Polycarbonate mit einem Gewichtsmittel des Molekulargewichts von 5 000 bis 200 000, umfassend
das Hinzufügen einer wäßrigen Dispersion eines Fluorpolymers zu einer Lösung eines halogenfreien thermoplastischen aromatischen Polycarbonats in einem organischen Lösungsmittel,
das Rühren der so gebildeten Lösung,
das Hinzufügen eines aus Estern, aromatischen Kohlenwasserstoffen, cycloaliphatischen Kohlenwasserstoffen, aliphatischen Kohlenwasserstoffen, Alkoholen, Carbonaten, Ethern, Ketonen und alkoholischen Lösungen von aliphatischen Carbonsäuren und Erdalkalimetallhalogeniden ausgewählten Fällungsmittels in einer Menge, die größer ist als 50 Gew.-%, bezogen auf das Gewicht der Polycarbonat-Lösung,
das Filtrieren des Copräzipitats,
das Waschen und Trocknen des Filtrats,
wobei die Menge des Fluorpolymers, das vermittels Dispersion zu der Polycarbonat-Lösung hinzugefügt wurde, zwischen 0,01 und 40 Gew.-%, bezogen auf das Gesamtgewicht von Fluorpolymer und Polycarbonat, liegt.

2. Verfahren nach Anspruch 1, umfassend die Einarbeitung von 5,05 bis 33 % Fluorpolymer in das Polycarbonat.

3. Koagulierte Copräzipitate von halogenfreien aromatischen thermoplastischen Polycarbonaten-Fluorpolymeren,
erhalten mittels des Verfahrens nach Anspruch 1 oder 2.